# EUROPEAN PATENT SPECIFICATION

(11) **EP 1 120 340 B1**
(45) Date of publication and mention of the grant of the patent: **17.03.2004**
(21) Application number: 01100522.0
(22) Date of filing: 09.01.2001
(51) Int. Cl.: B64C 1/00, B64C 27/04

(54) **Method of improving the crashworthiness of an aircraft**
Verfahren zum Verbesseren der Bruchfestigkeit eines Flugzeuges
Méthode pour améliorer la résistance à l'écrasement d'un aéronef

(30) Priority: 29.01.2000 GB 0002016
(43) Date of publication of application: 01.08.2001
(73) Proprietor: WESTLAND HELICOPTERS LIMITED, Yeovil, Somerset BA20 2YB (GB)
(72) Inventor: Clifford, William Simon, South Petherton, Somerset TA 13 5AN (GB)
(74) Representative: Lucking, David John

(56) References cited:
- EP-A- 0 233 681
- EP-A- 0 520 695
- US-A- 3 559 923
- US-A- 5 542 626

## Description

This invention relates to an aircraft and to a method of improving the crashworthiness of an aircraft.

Improving structural crashworthiness and occupant crash safety is a fundamental element of aircraft design. The invention has particularly been developed for a helicopter but may be applied to other aircraft types.

In a helicopter, crashworthiness and occupant crash safety have been addressed by providing a landing gear capable of absorbing high energy, designing the airframe structure to absorb energy through controlled deformation, and providing load limiting crashworthy seats for occupants.

In some helicopters however, in order to maximise cabin volume, a lower fuselage area below the cabin has been utilised for the location of fuel tanks, and accordingly, conventionally, designing this area of the fuselage to absorb energy through controlled deformation is not acceptable because of the risk of fire from ruptured fuel tanks in the event of a crash.

According to one aspect of the invention we provide an aircraft including a fuselage having a lower fuselage part and a fluid tank located adjacent the lower fuselage part, the fluid tank being at least partially filled with fluid and an open cell foam material so that in the event of impact on the lower fuselage part, fluid is constrained to flow through the foam to provide controlled deformation of the lower fuselage part.

Thus utilising the invention, it is acceptable to design the lower fuselage area to absorb energy through controlled deformation, without compromising the integrity of the tanks, and hence to improve the crashworthy properties of the aircraft in the event of a hard landing on land or on water.

Preferably in normal use the tank is filled with the foam material and a volume of fluid is contained in the cells of the foam material, typically predominantly in a bottom region of the tank.

The cells of the foam material not occupied with fluid, and any residual volume in the tank, for example formed as the fluid is used up, may conveniently be filled with a gas, which in the case of the fluid being fuel is preferably an inert gas.

Preferably the foam material is an open cell polyurethane foam having an average cell size within the foam arranged to provide a predetermined degree of resistance to deformation of the lower fuselage part. Thus the performance of the foam material can be tuned by changing the cell size to achieve a predetermined degree of resistance to deformation.

Typically the lower fuselage part is located beneath an aircraft cabin in which occupants are accommodated. The aircraft may include a landing gear structure which is arranged to provide primary high energy absorption in the event of impact, the fluid tank providing secondary high energy absorption in the event of landing gear structural collapse.

According to a second aspect of the invention we provide a method of controlling deformation of a lower fuselage part of an aircraft in the event of impact, the method including providing a fluid tank located adjacent the lower fuselage part, the fluid tank being at least partially filled with fluid and an open cell foam material so that in the event of impact on the lower fuselage part, fluid is constrained to flow through the foam to provide controlled deformation of the lower fuselage part.

The invention will now be described with reference to the accompanying drawing in which:-
FIGURE 1 shows part of an aircraft in accordance with the invention in a crashed state (right hand side) and normal state (left hand side);
FIGURE 2 illustrates a lower part of an aircraft fuselage in a normal condition; and
FIGURE 3 is a view similar to that of figure 2 but showing the lower part of the aircraft fuselage in a deformed state.

Referring to the drawings there is shown a part of a fuselage 10 of an aircraft, in this case a helicopter, although the invention may be applied to other aircraft as desired.

The fuselage 10 includes an outer fuselage skin, a lower part 12 of which includes a lower fuselage floor 13, and an internal floor 14 which provides the floor of a cabin 15 in which occupants, passengers or other occupants are accommodated.

Between the lower floor 13 and the internal floor 14 there is provided a space 16 in which is contained one or more fuel tanks 17.

In accordance with the invention, the or at least one of the fuel tanks 17 contains not only fuel 18 in a liquid state, but an open cell foam material 20, such as a polyurethane foam or other lightweight foam material which may fill or substantially fill the fuel tank 17.

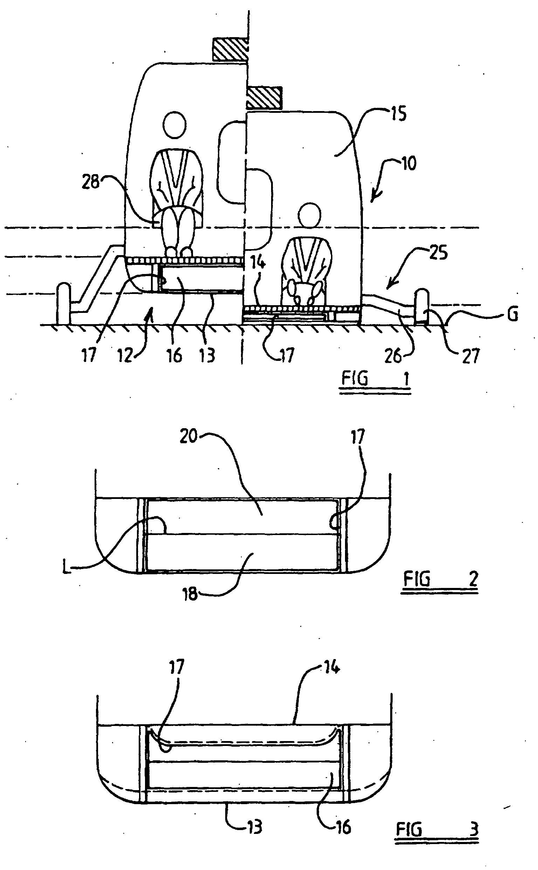

In the arrangement of figure 2, the entire tank 17 is filled with the foam material, and the fuel 18 occupies cells of the foam generally at the bottom of the tank 17. However, due to capillary action, some fuel 18 will be drawn upwardly in to the cells of the foam material 20 above the general fuel level L, to wet the foam.

A sufficient volume in the cells of the wetted foam material 20 is required to accommodate fuel 18 which is forced viscously to flow in the network of cells in the foam material 20 during deformation, in the event of a crash.

The cells of the foam material 20 not occupied by fuel 18, and any residual volume within the tank 17, e.g. formed as the fuel 18 is used up, where the tank 17 is not entirely filled with foam material 20, may be filled with a gas, typically an inert gas.

The helicopter includes landing gear 25 which may include struts 26 and wheels 27 or the like. Particularly where such landing gear 25 is not of the retractable kind, this would be designed to absorb high energy in the event of a crash, and thus to deform and collapse in a controlled manner. Such landing gear 25 thus provides a primary energy absorbing structure.

The lower part 12 of the fuselage 10, including both the internal floor 14 and the lower floor 13 together with the fuel tank 17 may also be designed to absorb energy in the event of a crash, providing a secondary energy absorbing structure.

From the right hand side of figure 1 it will be appreciated that in the event of a crash, and when the landing gear 25 has deformed/collapsed, the lower floor 13 will impact on the ground G. As indicated in figure 3 this will result not only in the lower floor 13 deforming upwardly, but the internal floor 14 of the cabin 15 may also be deformed downwardly, such that the space 16 therebetween is compressed, and the fuel tank 17 too and the foam material 20 therein will become compressed.

By virtue of the invention, during such compression, fuel in the tank 17 will be forced viscously to flow through the network of the open cells of the foam material 20. Thus forced flow and the compression of the foam will result in an absorption of energy without the integrity of the tank 17 being compromised. In figure 3 it can be seen that the lower floor 13 and the internal floor 14 may be designed to undergo a substantial amount of controlled deformation, as indicated by the dotted lines, whilst the fuel tank 17 will provide added controlled resistance.

In this way the impact forces transmitted to occupants of the aircraft may substantially be reduced thus significantly improving the probability of occupant survival in the event of a crash.

Of course occupant seats 28 within the cabin 15 may be adapted to absorb energy too providing yet further protection for occupants of the aircraft. In figure 3 it can be seen that the seats 28 may be designed to collapse in a controlled manner.

Various other modifications may be made without departing from the scope of the invention. For example, in figure 2 the fuel tank 17 is shown as being generally rectangular in cross section, but this may be of an alternative cross sectional configuration as required, to fit into the space 16 between the lower floor 13 and the internal floor 14, and to provide a desired energy absorption characteristic.

Preferably the fuel tank 17 has flexible walls, although particularly but not exclusively in other than helicopter installations, the fuel tank (or tanks) 17 may have metal e.g. aluminium, walls.

The foam material 20 average cell size may be selected, to provide a predetermined degree of resistance to deformation.

The invention has been described in relation to a fuel tank 17, but any other fluid tank in a lower part 12 of the fuselage 10 which is possibly subject to impact may be provided with foam material. The particular fuselage configuration shown in figure 1 of the drawings is only an example and many other fuselage configurations may benefit from the invention.

Further the landing gear 25 shown is only given as an illustrative example, and many other configurations are possible.

The deformation of the internal floor 14 and lower fuselage floor 13 indicated in figure 3 is of course only representative of the kinds of deformation which might occur in the event of a crash.

## Claims

1. An aircraft including a fuselage having a lower fuselage part (12) and a fluid tank (17) located adjacent the lower fuselage part (12), the fluid tank (17) being at least partially filled with fluid and an open cell foam material (20) so that in the event of impact on the lower fuselage part (12), fluid is constrained to flow through the foam (20) to provide controlled deformation of the lower fuselage part (12).

2. An aircraft according to claim 1 **characterised in that** in normal use the tank (17) is filled with the foam material (20) and a volume of fluid is contained in the cells of the foam material (20).

3. An aircraft according to claim 1 or claim 2 **characterised in that** cells of the foam material (20) not occupied with fluid and any residual volume of the tank (17) are filled with a gas.

4. An aircraft according to any one of claims 1 to 3 **characterised in that** the fluid tank (17) is a fuel tank.

5. An aircraft according to any one of claims 1 to 4 **characterised in that** the foam material (20) is an open cell polyurethane foam having an average cell size within the foam (20) arranged to provide a predetermined degree of resistance to deformation of the lower fuselage part (12).

6. An aircraft according to any one of the preceding claims **characterised in that** the lower fuselage part (12) is located beneath an aircraft cabin (15) in which occupants are accommodated.

7. An aircraft according to any one of the preceding claims which includes a landing gear structure (25) which is arranged to provide primary high energy absorption in the event of impact, the fluid tank (17) providing secondary high energy absorption in the event of landing gear (25) structural collapse.

8. A method of controlling deformation of a lower fuselage part (12) of an aircraft in the event of impact, the method including providing a fluid tank (17) located adjacent the lower fuselage part (12), the fluid tank (17) being at least partially filled with fluid and an open cell foam material (20) so that in the event of impact on the lower fuselage part (17), fluid is constrained to flow through the foam (20) to provide controlled deformation of the lower fuselage part (12).

## Patentansprüche

1. Luftfahrzeug mit einem Rumpf, der einen unteren Rumpfabschnitt (12) und einen Fluidoder Flüssigkeitstank (17) ausweist, der benachbart zu dem unteren Rumpfabschnitt (12) angeordnet ist, wobei der Fluid- oder Flüssigkeitstank (17) zumindest teilweise mit einer Flüssigkeit und mit einem offenzelligen Schaummaterial (20) gefüllt ist, so daß im Falle eines Aufpralls auf den unteren Rumpfabschnitt (12) die Flüssigkeit dazu gezwungen ist, durch den Schaum (20) zu strömen, um eine kontrollierte Deformation des unteren Rumpfabschnitts (12) herbeizuführen.

2. Luftfahrzeug nach Anspruch 1, **dadurch gekennzeichnet, daß** der Tank (17) im normalen Gebrauch mit dem Schaummaterial (20) gefüllt ist und daß ein Volumen einer Flüssigkeit in den Zellen des Schaummaterials (20) enthalten ist.

3. Luftfahrzeug nach Anspruch 1 oder 2, **dadurch gekennzeichnet, daß** Zellen des Schaummaterials (20), die nicht mit Flüssigkeit belegt sind, und etwaiges verbleibendes Volumen in dem Tank (17), mit einem Gas gefüllt sind.

4. Luftfahrzeug nach einem der Ansprüche 1 bis 3, **dadurch gekennzeichnet, daß** der Flüssigkeitstank (17) ein Kraftstofftank ist.

5. Luftfahrzeug nach einem der Ansprüche 1 bis 4, **dadurch gekennzeichnet, daß** das Schaummaterial (20) ein offenzelliger Polyurethanschaum ist, der eine mittlere Zellgröße innerhalb des Schaums (20) aufweist, die so eingestellt ist, daß ein vorbestimmtes Maß an Widerstand gegenüber einer Deformation des unteren Rumpfabschnitts (12) bereitgestellt ist.

6. Luftfahrzeug nach einem der vorangehenden Ansprüche, **dadurch gekennzeichnet, daß** der untere Rumpfabschnitt (12) unterhalb einer Kabine (15) des Luftfahrzeugs angeordnet ist, in der Insassen untergebracht sind.

7. Luftfahrzeug nach einem der vorangehenden Ansprüche, **dadurch gekennzeichnet, daß** eine Fahrgestellstruktur (25) vorhanden ist, die so eingerichtet ist, daß sie eine primäre, hohe Energieabsorption im Falle eines Aufpralls bereitstellt, wobei der Fluid- oder Flüssigkeitstank (17) eine sekundäre, hohe Energieabsorption für den Fall bereitstellt, daß ein struktureller Zusammenbruch des Fahr- bzw. Landegestells (25) eintritt.

8. Verfahren zum Kontrollieren einer Deformation eines unteren Rumpfabschnitts (12) eines Luftfahrzeugs im Falle eines Aufpralls, wobei das Verfahren umfaßt, einen Fluid- oder Flüssigkeitstank (17) bereitzustellen, der sich benachbart zu dem unteren Rumpfabschnitt (12) befindet, wobei der Fluid- oder Flüssigkeitstank (17) zumindest teilweise mit einer Flüssigkeit und mit einem offenzelligen Schaummaterial (20) gefüllt ist, so daß im Falle eines Aufpralls auf den unteren Rumpfabschnitt (17) die Flüssigkeit gezwungen ist, durch den Schaum (20) zu strömen, um eine kontrollierte Deformation des unteren Rumpfabschnitts (12) herbeizuführen.

## Revendications

1. Aéronef comprenant un fuselage qui comporte une partie inférieure de fuselage (12) et un réservoir de fluide (17) adjacent à la partie inférieure de fuselage (12), le réservoir de fluide (17) étant au moins en partie rempli avec un fluide et une matière en mousse à cellules ouvertes (20) de sorte que, dans le cas d'un impact sur la partie inférieure de fuselage (12), le fluide est forcé de s'écouler à travers la mousse (20) pour assurer une déformation contrôlée de la partie inférieure de fuselage (12).

2. Aéronef selon la revendication 1, **caractérisé en ce que**, en utilisation normale, le réservoir (17) est rempli avec la matière en mousse (20) et un volume de fluide est contenu dans les cellules de la matière en mousse (20).

3. Aéronef selon la revendication 1 ou la revendication 2, **caractérisé en ce que** les cellules de la matière en mousse (20) non occupées par le fluide et tout volume résiduel du réservoir (17) sont remplis avec un gaz.

4. Aéronef selon une quelconque des revendications 1 à 3, **caractérisé en ce que** le réservoir de fluide (17) est un réservoir de carburant.

5. Aéronef selon une quelconque des revendications 1 à 4, **caractérisé en ce que** la matière en mousse (20) est une mousse de polyuréthane à cellules ouvertes ayant une dimension moyenne de cellule dans la mousse (20) prévue pour engendrer un degré prédéterminé de résistance à la déformation de la partie inférieure de fuselage (12).

6. Aéronef selon une quelconque des revendications précédentes, **caractérisé en ce que** la partie inférieure de fuselage (12) est située au-dessous d'une cabine d'aéronef (15) dans laquelle les occupants sont logés.

7. Aéronef selon une quelconque des revendications précédentes, qui comprend une structure de train d'atterrissage (25) prévue pour effectuer une absorption principale d'énergie élevée dans le cas d'un impact, le réservoir de fluide (17) effectuant une absorption secondaire d'énergie élevée dans le cas d'écrasement structurel du train d'atterrissage (25).

8. Procédé de limitation de la déformation d'une partie inférieure de fuselage (12) d'un aéronef dans le cas d'un impact, le procédé comprenant l'installation d'un réservoir de fluide (17) adjacent à la partie inférieure de fuselage (12), le réservoir de fluide (17) étant au moins partiellement rempli avec un fluide et une matière en mousse à cellules ouvertes (20) de sorte que, dans le cas d'un impact sur la partie inférieure de fuselage (12). le fluide est forcé de s'écouler à travers la mousse (20) pour assurer une déformation contrôlée de la partie inférieure de fuselage (12).
